# EUROPÄISCHE PATENTANMELDUNG

(11) **EP 1 258 284 A2**
(43) Veröffentlichungstag der Anmeldung: **20.11.2002**
(21) Anmeldenummer: 02009341.5
(22) Anmeldetag: 03.05.2002
(51) Int. Cl.: B01J 8/00

(54) **Verfahren zum Abfüllen von feuchtem, klebrigem Schüttgut**

(30) Priorität: 16.05.2001 DE 10123885
(71) Anmelder: BAYER AG, 51368 Leverkusen (DE)
(72) Erfinder: Gottschalk, Lutz, 8610 Uster (CH); Ronge, Georg, Dr., 40549 Düsseldorf (DE); Schäfer, Johannes-Peter, 51515 Kürten (DE); Müller, Dirk, Dr., 51465 Bergisch Gladbach (DE); Prein, Michael, Dr., 2930 Brasschaat (BE); Verhoeven, Werner, Dr., 2920 Kalmthout (BE); Sluyts, Domien, 2940 Stabroek (BE)

(57) **Zusammenfassung**

Es wird ein Verfahren zum Abfüllen von feuchtem, klebrigem oder statisch aufgeladenem Schüttgut, insbesondere von Katalysatormaterial, in kammerförmige Gebinde, die eine Vielzahl von feinen Öffnungen aufweisen, beschrieben. Dabei wird das Schüttgut in einem Fluid, insbesondere einer Flüssigkeit, aus einem Vorrat gefördert, durch eine Öffnung des Gebindes in das Gebinde eingelassen, wobei das Fluid aus einer Vielzahl von Öffnungen des Gebindes austritt, die das Schüttgut im Gebinde zurückhalten. Anschließend wird das Fluid in den Vorrat zurückgeführt.

## Beschreibung

Die Erfindung betrifft ein Verfahren zum Abfüllen von feuchtem, klebrigem oder statisch aufgeladenem Schüttgut, insbesondere von Katalysatormaterial, in kammerförmige Gebinde.

Aus den Offenlegungsschriften DE 197 01 045 A1 oder EP 0 640 385 A1 sind Packungen für Katalysatormaterial bekannt, die mit verschließbaren Taschen ausgestattet sind, in die das Katalysatormaterial als Schüttgut eingefüllt werden kann und die zumindest teilweise wiederverwertbar sind, wenn man den Katalysator austauscht. Das Befüllen der Katalysatortaschen bzw. der Austausch des Katalysators insbesondere das Befüllen der Katalysatortaschen ist in der Praxis zeitlich aufwendig und mit weiteren Problemen behaftet, da das Katalysatormaterial häufig feucht, klebrig oder statisch aufgeladen und deshalb kaum rieselfähig ist.

Aufgabe der Erfindung ist es ein Verfahren bereitzustellen, mit dem es ermöglicht wird in kurzer Zeit gezielt Packungen oder Gebinde der genannten Art mit feuchtem, klebrigem oder statisch aufgeladenem Schüttgut zu füllen.

Die Aufgabe wird erfindungsgemäß gelöst durch ein Verfahren nach dem Oberbegriff des Anspruch 1 mit den kennzeichnenden Merkmalen des Anspruchs 1

Gegenstand der Erfindung ist ein Verfahren zum Abfüllen von feuchtem, klebrigem oder statisch aufgeladenem Schüttgut, insbesondere von Katalysatormaterial, in kammerförmige Gebinde, die eine Vielzahl von feinen Öffnungen aufweisen, dadurch gekennzeichnet, dass das Schüttgut in einem Fluid, insbesondere einer Flüssigkeit, insbesondere bevorzugt in Wasser aus einem Vorrat gefördert wird, durch eine Öffnung des Gebindes in das Gebinde eingelassen wird und das das Fluid aus einer Vielzahl von Öffnungen des Gebindes austritt, die das Schüttgut im Gebinde zurückhalten und dass das Fluid in den Vorrat zurückgeführt wird.

Bevorzugt liegen die Gebinde in Bänderform vor und sind insbesondere bevorzugt aus einem Metallgewebe gefertigt.

Das Verfahren ist geeignet zur Einbringung von festen, granulatähnlichen oder gelförmigen, katalytisch, biologisch oder adsorbierend wirkenden Mitteln unterschiedlicher Korngrößen als fein verteilte Teilchen in einem Fluid in strukturierte Packungen mit Zweitfunktionalitätselementen, wobei die Erstfunktionalität darin besteht, eine möglichst hohe Kontaktfläche zwischen zwei oder mehr Phasen für den Stoffaustausch zur Verfügung zu stellen. Bei den Zweitfunktionalitätselementen handelt es sich um abgeschlossene Kammern, bestehend aus einem Gewebe oder einer Membran, das bzw. die für mindestens ein im Prozess vorkommendes Fluid durchlässig ist. In den Kammern befindet sich das im Sinne der Zweitfunktionalität wirksame, feste Material, welches nach dem Verschließen der Kammer im Anschluss an den Befüllvorgang nicht mehr aus der Kammer heraustreten können. Neben dem Volumen und der Anzahl der Kammern im losen oder festen Verbund mit Stoffaustauschelementen kann auch der Füllgrad der Kammern entsprechend den Anforderungen eines Prozesses und denen des eingebrachten aktiven Materials variiert werden.

Bei verschiedenen physikalisch-chemischen Prozessen kann es von wesentlichem Vorteil sein, wenn physikalische Stoffaustauschvorgänge, z.B. durch Rektifikation oder Absorption, durch chemische, biologische oder sonstige Stoffumwandlungsvorgänge überlagert sind und umgekehrt. Dabei ist es notwendig, einerseits eine für den Stoffübergang zwischen den fluiden Phasen ausreichende Kontaktfläche, andererseits jedoch auch eine möglichst große aktive Oberfläche zur Gewährleistung der Zweitfunktionalität zur Verfügung zu stellen, wobei beide Funktionalitäten - Stoffaustausch und Stoffumwandlung - in einem breiten Maße entsprechend den Prozessanforderungen variierbar sein müssen.

In einem solchen Zusammenhang werden für bestimmte Anwendungen, z.B. heterogen katalysierte chemische Reaktionen in der Flüssigphase, sogenannte katalytisch wirksame Stoffaustauschpackungen eingesetzt, die unter anderem in den Patentschriften DE 197 01 045 A 1, EP 0 631 813 A1, WO 98/58721 bzw. WO 97/24174 beschrieben werden.

Ein wesentlicher Nachteil dieser bekannten Vorrichtungen für die simultane Durchführung von Stoffaustausch und Stoffumwandlung ist der vergleichsweise große Aufwand, der betrieben werden muss, um die katalytisch bzw. biologisch oder adsorbierend wirkenden Mittel in die zum Teil geometrisch aufwendig geformten Kammern einzubringen. Insbesondere kann das Befüllen der Kammern mit solchen Materialien schwierig bzw. unter Arbeitsschutzgesichtspunkten problematisch sein, wenn es sich um nicht rieselfähige, klebrige oder staubbildende bzw. entgasende oder auch statisch aufgeladene Feststoffe bzw. Granulate oder gelförmige Feststoffe handelt. Bei der bisher üblichen Vorgehensweise zur Befüllung der Kammern in strukturierten Packungen mit Zweitfunktionalität ist eine mehr oder weniger gute Rieselfähigkeit des einzufüllenden Materials als grundsätzliche Voraussetzung anzusehen. Das katalytisch, biologisch oder in sonstiger Weise im Sinne der Zweitfunktionalität aktive Material wird beim Einfüllvorgang zunächst per Hand oder maschinell über einen Trichter oder eine ähnliche Vorrichtung durch die Einfüllöffnung der Kammern in dieselbe hineingefördert, um dann anschließend z.B. durch Rüttelbewegungen in der Kammer möglichst gleichmäßig verteilt zu werden.

Es ist sehr leicht vorstellbar, dass bei einer solchen, mit der oben geschilderte Methode ähnlichen Vorgehensweise, insbesondere bei sehr schlecht rieselfähigen Granulaten, zahlreiche Schwierigkeiten - z.B. ungleichmäßige Verteilung des Materials in den Kammern, Hohlräume bzw. unterschiedliche Füllgrade der einzelnen Kammern usw. - bestehen. Es ist dementsprechend Zielsetzung der Erfindung, ein deutlich vereinfachtes und praktikables Verfahren zur Verfügung zu stellen, dass in Bezug auf die oben genannten Schwierigkeiten beim Befüllen der Kammern wesentliche Vorteile bietet. Zudem soll der Zeit- und Arbeitsaufwand zur Befüllung der Zweitfunktionalitätselemente deutlich verringert werden. Diese Aufgabenstellung kann durch die erfindungsgemäße Verfahrensweise gelöst werden.

Das Verfahren zur Einbringung von festen, granulatartigen katalytisch, biologisch oder adsorbierend wirkenden Mitteln in strukturierte Mehrzweckpackungen mit Zweitfunktionalitätselementen erfolgt insbesondere in der Weise, dass das im Sinne der Zweitfunktionalität aktive Material in Form fein verteilter Feststoffteilchen in einem Fluid in die im Betriebszustand abgeschlossenen Kammern eingefüllt wird. Dabei wird der Feststoff an der Wandinnenseite der Kammern zurückgehalten, letztere sind jedoch für das Fluid durchlässig, welches somit durch die Kammerwandungen hindurchtreten und nach außen abfließen kann.

Bei der Durchführung des Verfahrens wird z.B. in einem ersten Schritt eine förderfähige Feststoff-Flüssigkeits-Mischung in einem Fluidisierungsbehälter erzeugt. Als Fluidisierungsbehälter dient bevorzugt ein Behälter oder Reaktor, der mit einem Rührer als Mischelement versehen ist. Alternativ dazu kann die Herstellung der Feststoff-Fluid-Mischung auch durch die bloße Zufuhr des zur Mischung verwendeten Fluides oder eines zweiten Fluides zum Fluidisierungsbehälter erreicht werden.

Auf diese Weise können auch nicht oder nur schwer rieselfähige Granulate (z.B. wasserfeuchte oder mit organischen Lösungsmitteln getränkte lonentauscherharze) in eine kontinuierlich förderbare Form gebracht werden. Darüber hinaus kann zum Beispiel die Bildung von Stäuben beim Befüllen durch das Herstellen einer Suspension mit einer Flüssigkeit vermieden oder Schwierigkeiten beim Handling statisch aufladbarer Granulate umgangen werden (z.B. Oxidische Katalysatoren - Staubbildung durch Abrieb bei der trockenen Förderung bzw. lonentauscherharze - statische Aufladung im wasserfreien Zustand).

Bevorzugt ist ein Verfahren bei dem das Schüttgut enthaltenden Fluid vor dem Einfüllen in die Gebinde ein Zusatzstoff zugefügt wird.

Die Beimengung des Zusatzstoffes erfolgt insbesondere bevorzugt über eine statische oder dynamische Mischereinheit.

Als dem Verfahren zugängliches Schüttgut dient bevorzugt ein heterogener Katalysator, insbesondere Ionenaustauscherharz, ein oxidischer Katalysator oder Hydrierkatalysator oder ein adsorbierender bzw. absorbierender Feststoff, insbesondere Aktivkohle oder ein Trägermaterial mit Biofilm.

Als Fluid wird bevorzugt ein anorganisches oder organisches Lösungsmittel, besonders bevorzugt Methanol, Ethanol, Heptan oder Wasser.

In einer besonders bevorzugten Variante des Verfahrens ist das Schüttgut ein saures oder basisches Ionenaustauscherharz und als Fluid wird Wasser verwendet.

Weiter bevorzugt ist eine Ausführung des Verfahrens, die dadurch gekennzeichnet ist, dass der Mischung aus Fluid und Schüttgut ein Zusatzstoff beigefügt wird der ein Cokatalysator ist.

Als Fluid sind hier insbesondere solche Medien geeignet, welche die physikalischen, chemischen, biologischen oder sonstigen im späteren Betriebszustand erwünschten Eigenschaften des einzufüllenden Feststoffes bzw. des Gesamtsystems nicht irreversibel verändern. Es kommen so bevorzugt Flüssigkeiten oder Gase in Frage, die sich den katalytisch, biologisch oder adsorbierend wirkenden Mitteln gegenüber chemisch inert verhalten bzw. im späteren Betriebszustand oder bei der Herstellung der im Sinne der Zweitfunktionalität aktiven Materialien zumindest Teil des Arbeitsmediums oder der Umgebung sind, ohne dabei einen unerwünschten Einfluss im Betriebszustand auszuüben (z.B.: lonenaustauscherharze als aktives Granulat und organische Lösungsmittel wie Methanol, Ethanol oder Heptan als Fluide). Darüber hinaus sind jedoch auch solche Fluide geeignet, die sich direkt nach dem Befüllen der Kammern bzw. spätestens bei der Inbetriebnahme der technischen Anlage soweit vollständig aus dem System entfernen lassen, dass der gewünschte Betriebszustand nicht beeinträchtigt wird - z.B. lonenaustauscherharze und Wasser als Fluid. Ein wesentlicher Vorteil des neuen Einbringverfahrens kann somit dadurch entstehen, dass beispielsweise verschiedene Zwischenschritte bei Herstellung oder Konditionierung des im Sinne der Zweitfunktionalität aktiven Feststoffes - wie zum Beispiel Flüssigkeitsabtrennung oder Trocknung - entfallen oder im eingefüllten Zustand in der technischen Anlage einfacher und effektiver durchgeführt werden können.

Nachdem das Granulat im Fluidisierungsbehälter in eine kontinuierlich förderfähige Form gebracht wurde, erfolgt der Transport der Feststoff-Flüssigkeits-Mischung beispielsweise über eine Schlauch- oder Rohrleitung zu den zu befüllenden Kammern. Am Ende der Leitung befindet sich insbesondere eine abgeflachte bzw. entsprechend den Erfordemissen der Geometrien der Zweitfunktionalitätselemente geformte Düse, die ein sauberes Einfüllen der Feststoff-Fluid-Mischung in die Kammern ermöglicht. Die für den Transport erforderliche Energie kann dabei entweder durch Pumpen oder das Anlegen eines Druckgefälles bereitgestellt werden. Die Turbulenz der Strömung in der Rohr bzw. Schlauchleitung sorgt dafür, dass die Feinverteilung des Feststoffes im Fluid erhalten bleibt.

Des weiteren besteht die Möglichkeit, in die Befüllapparatur eine zusätzliche Mischstrecke zu integrieren, die es erlaubt Zusatzstoffe zum im Sinne der Zweitfunktionalität aktiven Material mit hinzuzugeben, welche zum Beispiel geeignet sind, die Eigenschaften des Feststoffes in einer gewünschten Weise zu beeinflussen. Ein ganz erheblicher Vorteil ist hierbei darin zu sehen, dass durch die Zugabe des Zusatzstoffes in eine turbulent durchströmte Mischstrecke eine sehr gute Verteilung erzielt werden kann. Als Beispiel sei hier die Belegung von Katalysatorkörnern mit einem Co-Katalysator genannt, bei welcher eine möglichst gleichmäßige Aufbringung mit Sicherheit von großer Bedeutung ist.

Nachfolgend wird das neue Verfahren anhand der Figuren beispielhaft näher beschrieben. Es zeigen:
- Fig. 1: eine schematische Darstellung der Gesamtapparatur zum Befüllen
- Fig. 2: eine detaillierte Darstellung der Befüllstation (11).

### Beispiel

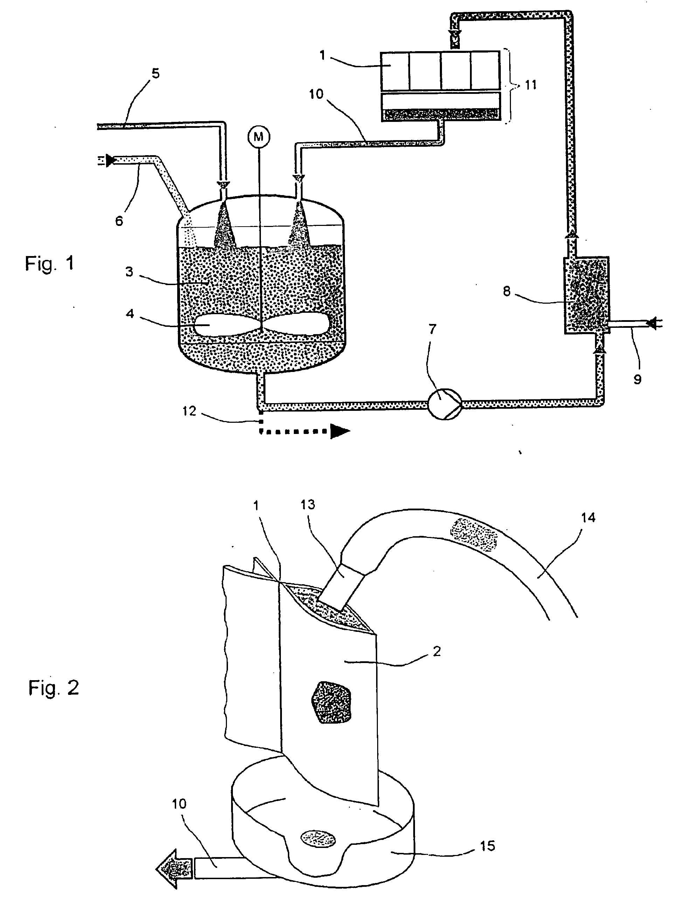

Fig. 1 zeigt eine schematische Darstellung der Gesamtapparatur zum Befüllen der Gebinde 1 mit mehreren Kammern 2 in Bänderform der strukturierten Mehrzweckkatalysatorpackung. (Die Packung entspricht der aus DE 197 01 045 A1 bekannten Packung.) Die Apparatur besteht aus einem Fluidisierungsbehälter 3 einschließlich Rührer 4, den Zuführungen für das Fluidisierungsmittel 5 und den Feststoff 6 sowie einer Pumpe 7 für das Feststoff-Fluid-Gemisch, einer Mischereinheit 8 für die Zufuhr und Einmischung von Zusatzstoffen, dem Zulaufstrom für die Zusatzstoffe 9 zur Mischereinheit und dem Fluidisierungsmittel-Rücklaufstrom 10 von der Befüllstation 11 zum Fluidisierungsbehälter 3.

Im Behälter 3 wird der Katalysator 6 mit Wasser gemischt und aufgerührt. Die Pumpe 7 fördert die Mischung durch die Mischereinheit 8 zur Befüllstation 11

Fig. 2 gibt eine detaillierte Darstellung der Befüllstation 11 wieder. Dargestellt sind die Einfülldüse 13 mit Schlauchleitung 14, das zu befüllende Gebinde 1 in Bänderform mit einseitig offenen Kammern 2 sowie ein unterhalb angeordnetes Sammelbecken 15 für das ablaufende Fluidisierungsmittel (Wasser) mit Rücklaufleitung 10 zum Fluidisierungsbehälter 3. Der Katalysator 6 wird durch die Maschen der Kammer 2 zurückgehalten und das Wasser kann zum Fluidisierungsbehälter 3 zurückfließen.

## Patentansprüche

1. Verfahren zum Abfüllen von feuchtem, klebrigem oder statisch aufgeladenem Schüttgut, insbesondere von Katalysatormaterial, in kammerförmige Gebinde, die eine Vielzahl von feinen Öffnungen aufweisen, **dadurch gekennzeichnet, dass** das Schüttgut in einem Fluid, bevorzugt in Wasser aus einem Vorrat gefördert wird, durch eine Öffnung des Gebindes in das Gebinde eingelassen wird und dass das Fluid aus einer Vielzahl von Öffnungen des Gebindes austritt, die das Schüttgut im Gebinde zurückhalten und dass das Fluid in den Vorrat zurückgeführt wird.

2. Verfahren nach Anspruch 1, **dadurch gekennzeichnet, dass** die Gebinde in Bänderform vorliegen und insbesondere aus einem Metallgewebe gefertigt sind.

3. Verfahren nach einem der Ansprüche 1 oder 2, **dadurch gekennzeichnet, dass** dem das Schüttgut enthaltenden Fluid vor dem Einfüllen in die Gebinde ein Zusatzstoff zugefügt wird.

4. Verfahren nach Anspruch 3, **dadurch gekennzeichnet, dass** die Beimengung des Zusatzstoffes über eine statische oder dynamische Mischereinheit erfolgt.

5. Verfahren nach einem der Ansprüche 1 bis 4, **dadurch gekennzeichnet, dass** als Schüttgut ein heterogener Katalysator, insbesondere Ionenaustauscherharz, ein oxidischer Katalysator oder Hydrierkatalysator oder ein adsorbierender bzw. absorbierender Feststoff, insbesondere Aktivkohle oder ein Trägermaterial mit Biofilm verwendet wird.

6. Verfahren nach einem der Ansprüche 1 bis 5, **dadurch gekennzeichnet, dass** als Fluid ein anorganisches oder organisches Lösungsmittel, bevorzugt Methanol, Ethanol, Heptan oder Wasser verwendet wird.

7. Verfahren nach einem der Ansprüche 1 bis 6, **dadurch gekennzeichnet, dass** das Schüttgut ein saures oder basisches Ionenaustauscherharz ist und als Fluid Wasser verwendet wird.

8. Verfahren nach einem der Ansprüche 1 bis 7, **dadurch gekennzeichnet, dass** der Mischung aus Fluid und Schüttgut ein Zusatzstoff beigefügt wird der ein Cokatalysator ist.
